## Europäisches Patentamt
## European Patent Office
## Office européen des brevets

(19)

(11) Veröffentlichungsnummer: **0 258 587**
**B1**

(12)

# EUROPÄISCHE PATENTSCHRIFT

(45) Veröffentlichungstag der Patentschrift:
**10.10.90**

(51) Int. Cl.⁵: **B60T 13/18**

(21) Anmeldenummer: **87110196.0**

(22) Anmeldetag: **15.07.87**

(54) **Hydraulische Steuereinrichtung.**

(30) Priorität: **30.08.86 DE 3629659**

(43) Veröffentlichungstag der Anmeldung:
**09.03.88 Patentblatt 88/10**

(45) Bekanntmachung des Hinweises auf die Patenterteilung:
**10.10.90 Patentblatt 90/41**

(84) Benannte Vertragsstaaten:
**DE FR GB IT**

(56) Entgegenhaltungen:
**DE-A- 3 418 172**
**GB-A- 2 115 894**

(73) Patentinhaber: **ROBERT BOSCH GMBH, Postfach 50,
D-7000 Stuttgart 1(DE)**

(72) Erfinder: **Anton, Eckhard, Ing. (grad.),
Hermann-Essig-Strasse 106,
D-7141 Schwieberdingen(DE)**
Erfinder: **Sandau, Hartmut, Dipl.-Ing. (FH),
Ludwigsburger Strasse 56, D-7141 Möglingen(DE)**

ACTORUM AG

## Beschreibung

### Stand der Technik

Die Erfindung geht aus von einer hydraulischen Steuereinrichtung nach der Gattung des Hauptanspruchs (siehe DE-A 3 418 172). Eine derartige bekannte Steuereinrichtung wird als Bremsventil für die Versorgung eines Bremszylinders angewendet. Die Pumpe für die Druckmittelversorgung ist verstellbar ausgebildet, und ihre Fördermenge hängt ab von einem Signaldruck, der von einem Ort innerhalb des Steuerschiebers des Stromregelventils abgenommen wird und ein Abschaltverhalten der Pumpe bewirkt.

### Vorteile der Erfindung

Die erfindungsgemäße Steuereinrichtung mit den kennzeichnenden Merkmalen des Hauptanspruchs hat demgegenüber den Vorteil, daß sie für den sogenannten Load-Sensing-Betrieb geeignet ist, d. h. für einen Betrieb, bei dem verschiedene Verbraucher mit Druckmittel versorgt werden und wobei der höchste Druckmitteldruck ausgewählt wird, um die verstellbare Pumpe so einzustellen, daß sie gerade den notwendigen Druckmittelstrom liefert. Derartige Systeme sind an sich bekannt, jedoch nicht unter Einbeziehung der erfindungsgemäßen Steuereinrichtung.

Durch die in den Unteransprüchen aufgeführten Maßnahmen sind Weiterbildungen und Verbesserungen der im Hauptanspruch angegebenen Merkmale möglich.

### Zeichnung

Zwei Ausführungsbeispiele der Erfindung sind in der Zeichnung dargestellt und in der nachfolgenden Beschreibung näher erläutert. Die Zeichnung zeigt jeweils einen Längsschnitt durch eine hydraulische Steuereinrichtung mit zugehöriger Verbraucheranlage.

### Beschreibung der Ausführungsbeispiele

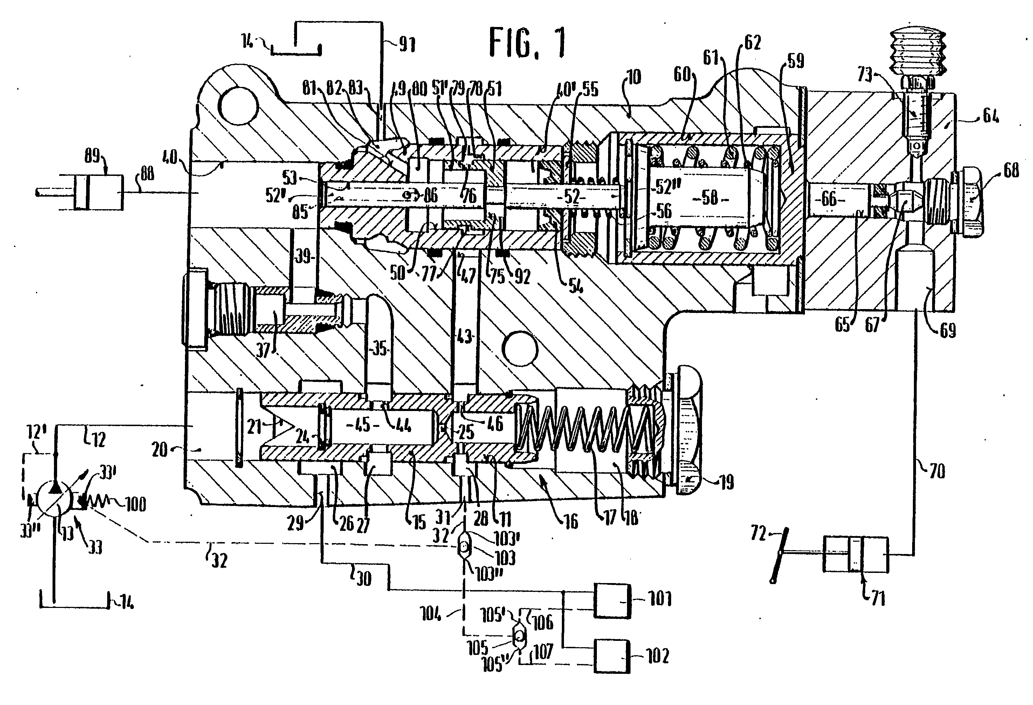

Die Steuereinrichtung nach Figur 1 weist ein Ventilgehäuse 10 mit einer durchgehenden Längsbohrung 11 auf, an welche eine Förderleitung 12 angeschlossen ist, in die eine verstellbare Pumpe 13 aus einem Behälter 14 Druckmittel fördert. In der Längsbohrung 11 ist ein Steuerschieber 15 eines Stromregelventils 16 gleitend geführt, auf den entgegen dem einströmenden Druckmittel eine Reglerfeder 17 einwirkt. Der hintere Teil der Bohrung 18, in welchem die Reglerfeder angeordnet ist, ist durch eine Verschlußschraube 19 dicht abgeschlossen. Dem Einlaß 20 der Längsbohrung 11 zugewandt, sind an der Stirnseite des Steuerschiebers 15 zwei Dreieckkerben 21 ausgebildet.

Im Inneren des Steuerschiebers 15 ist eine Blende 24 angeordnet, stromabwärts von dieser eine Drossel 25 mit wesentlich kleinerem Durchmesser als dem der Blende 24. An der Längsbohrung 11 sind drei Ringnuten 26, 27, 28 ausgebildet. Von der Ringnut 26 verläuft eine Bohrung 29 zum Äußeren des Ventilgehäuses; dort ist eine Leitung 30 angeschlossen, die zu Verbrauchern 101, 102 führt. Von der Ringnut 28 verläuft eine Bohrung 31 nach außen, an die eine Steuerleitung 32 angeschlossen ist, die über ein Wechselrückschlagventil 103 zu einer Verstelleinrichtung 33 der Pumpe 13 führt, welche aus zwei druckbeaufschlagten Kolben 33′, 33″ besteht. Der Kolben 33′ ist zusätzlich von einer Druckfeder 100 belastet; dort mündet auch die Steuerleitung 32, während zum Kolben 33″ eine von der Leitung 12 ausgehende Steuerleitung 12′ führt. In die Ringnut 27 mündet auch noch ein Kanal 35, in den eine Gehäusebohrung 37 eindringt. Von der Gehäusebohrung 37 geht ein Kanal 39 aus, der in eine parallel zur Längsbohrung 11 verlaufende Längsbohrung 40 mündet.

Von der Ringnut 28 verläuft ein Kanal 43 zu einer Ringnut 47 an einem erweiterten Teil 40′ der Längsbohrung 40. In den zwischen der Blende 24 und der Drosselbohrung 25 gelegenen Raum 45 im Steuerschieber münden mehrere Radialbohrungen 44. Stromabwärts der Drosselbohrung 25 münden in den hohlen Steuerschieber mehrere Radialbohrungen 46.

Im erweiterten Teil 40′ der Längsbohrung 40 ist ein becherförmiger Gehäuseeinsatz 49 angeordnet, in dessen Gehäusebohrung 50 ein Schieber 51 gleitend gelagert ist. An diesem ist ein Kolben 52 befestigt, dessen linker Teil 52′ dicht in einem achsgleich zur Gehäusebohrung 50 verlaufenden Bohrungsteil 53 gleitet, während sein rechter Teil 52″ durch eine Dichtmanschette 54 nach außen geführt ist. Die Dichtmanschette stützt sich an einer Scheibe 55 ab, gegen die sich auch eine um den rechten Teil 52″ des Kolbens gewickelte Feder 56 legt, deren anderes Ende an einem Federwiderlager 58 anliegt. Dieses ist in einem Kolben 59 angeordnet, der in einer Bohrung 60 gleitend ge lagert ist, die achsgleich zur Gehäusebohrung 40 verläuft. Auf das Federwiderlager wirken Federn 61, 62 ein. Die Bohrung 60 ist durch ein Gehäuse 64 verschlossen, in dem eine Längsbohrung 65 ausgebildet ist, die achsgleich zur Gehäusebohrung 40 verläuft. In der Längsbohrung 65 ist ein Kolben 66 dicht gleitend gelagert. Er hat einen Stößel 67, der sich gegen eine die Längsbohrung 65 verschließende Verschlußschraube 68 legt. In die Längsbohrung 65 mündet eine im Gehäuse 64 verlaufende Querbohrung 69, an welche eine Leitung 70 angeschlossen ist. Diese geht aus von einem Druckgeber 71, der durch ein Bremspedal 72 betätigbar ist. An die Längsbohrung 65 ist noch eine Entlüftungsvorrichtung 73 angeschlossen.

Die Ringwand 51′ des Schiebers 51 ist durch eine Querbohrung 76 durchbrochen, die Stirnwand durch eine Bohrung 75; erstere mündet in eine Ringnut 77, die mit einer Ringnut 78 im Gehäuseeinsatz 49 zusammenwirkt. Die beiden Ringnuten 77, 78 stehen über eine die Wand des Gehäuseeinsatzes 49 durchdringende Querbohrung 79 miteinander in Verbindung und damit mit dem Kanal 43. Vom Raum 80 innerhalb des Gehäuseeinsatzes 49 verläuft eine Schrägbohrung 81 in einer Ringnut 82 des Bohrungsteils 40' der Gehäusebohrung 40. Von der Ringnut 82 geht eine Bohrung 83 aus, die an der Gehäuseaußenseite mündet. Im linken Teile 52' des Kolbens 52 befindet sich eine Längsbohrung 85, von der eine Querbohrung 86 nach außen verläuft und in einer bestimmten Stellung des Schiebers 51 Verbindung zum Raum 80 hat. Von der Längsbohrung 40 führt eine Leitung 88 zu einem Bremszylinder 89. Von der Bohrung 83 verläuft eine Leitung 91 zum Behälter 14. Die mit der Bohrung 31 verbundene Leitung 32 führt zum ersten Ventilsitz 103' des Wechselrückschlagventils 103, von der Längsseite desselben führt die Leitung 32 dann zur Verstelleinrichtung 33. An den zweiten Ventilsitz 103" führt eine Leitung 104 heran, die von der Längsseite eines Wechselrückschlags 105 ausgeht. Von dessen beiden Ventilsitzen 105' und 105" führt jeweils eine Steuerleitung 106 bzw. 107 zu den Verbrauchern 101 und 102. Über die Steuerleitungen 106 und 107 wird der jeweils höhere Druck an den Verbrauchern ausgewählt und über das Wechselrückschlagventil 105 und die Leitung 104 zum Wechselrückschlag 103 übertragen. Von dort wiederum gelangt der höhere Druck aus der Leitung 32 bzw. 104 zur Verstelleinrichtung 33. Dadurch wird die Pumpe 33 stets so eingestellt, daß sie gerade den erforderlichen Druckmittelstrom fördert.

Die Steuereinrichtung arbeitet wie folgt:

Die Pumpe 13 fördert Druckmittel über den Einlaß 20 in die Längsbohrung 11, wobei dieses auch in das Innere des Steuerschiebers gelangt. Ein Teil dieses Druckmittels fließt über die Blende 24 und die Drosselbohrung 25 in den Raum 18. Infolge des Durchflußwiderstands an der Blende 25 und der dabei erzeugten Druckdifferenz wird der Steuerschieber 15 entgegen der Kraft der Reglerfeder 17 nach rechts verschoben und stellt über die Dreieckkerben 21 Verbindung zur Ringnut 26 und zur Leitung 30 und damit zu den dort angeschlossenen Verbrauchern her. Über die Drosselbohrung 25 fließt jetzt ein Steuerölstrom zur Querbohrung 46, von dieser in die Ringnut 28 und den Kanal 43, von dort über die Ringnut 47 in die Querbohrung 79 des Gehäuseeinsatzes 49 und dann in die Ringnuten 78, 77 und die Querbohrung 76 in den Raum 80. Von dort fließt das Druckmittel über die Schrägbohrung 81 und die Leitung 91 zum Behälter 14 ab.

Auf den Kolben 33" der Verstelleinrichtung 33 der Pumpe 13 wirkt stets der Druck in der Förderleitung 12, auf den Kolben 33' der Druck in der Steuerleitung 32. Durch die auf den Stellkolben 33' einwirkende Druckfeder 100 wird stets ein Druckgefälle zwischen der Bohrung 31 und Einlaß 20 aufrechterhalten. Wird nicht gebremst, so fördert die Pumpe 13 gerade diejenige Druckmittelmenge, die an den Verbrauchern 101 und/oder 102 benötigt wird, und den obengenannten geringen Steuerölstrom für die Einrichtung.

Wenn das Bremspedal 72 betätigt wird, baut sich in der Leitung 70 und in den Bohrungen 69 und 65 Druck auf, und der Kolben 66 wird entgegen dem Kolben 59 nach links verschoben. Das Federwiderlager 58 drückt auf den Kolben 52, wodurch dieser nach links verschoben wird samt dem Schieber 51. Dadurch wird die Querbohrung 86 verschlossen, so daß die Verbindung von der Bohrung 40 zum Raum 80 unterbrochen ist. Der Schieber 51 hat auch die Verbindung vom Kanal 43 zum Raum 80 versperrt, so daß kein Steueröl mehr zum Behälter 14 abfließen kann. Dadurch wird die Druckdifferenz an der Blende 25 abgebaut, und die Feder 17 bewegt den Steuerschieber 15 nach links, wodurch die Querbohrungen 44 mit der Ringnut 27 in Verbindung kommen. Nun wird aufgrund des Druckabfalls an der Blende 24 ein Teil des von der Pumpe 13 geförderten Druckmittels in den Kanal 35 und in den Kanal 39 geleitet, weiterhin von dort in die Längsbohrung 40 sowie in die Leitung 88 und zum Bremszylinder 89. Druckmittel gelangt nun aber auch über die Querbohrungen 46 in die Bohrung 31 und in die Steuerleitung 32. Entsprechend dem in dieser herrschenden Druck vergrößert nun die Pumpe 13 den Druck in der Leitung 12 um ihr Druckgefälle zwischen 20 und 31. Sie steigert dabei ihre Fördermenge, um dieses Druckgefälle aufrechtzuerhalten. Der Bremszylinder 89 wird gefüllt.

Ist der durch die Pedalkraft eingegebene Druck erreicht, wird der Kolben 52 nach rechts verschoben, wobei er den Schieber 51 mitnimmt. Die Ringnut 77 stellt wieder Verbindung über die Leitung 91 zum Behälter 14 her, wodurch der Druck im Kanal 43 fällt. Dadurch wird der Steuerschieber 15 des Stromregelventils entgegen der Kraft der Reglerfeder 17 nach rechts verschoben, wodurch das von der Pumpe 13 geförderte Druckmittel über die Dreieckkerben 21, die mit diesen verbundene Ringnut 26 und die Leitung 30 zu den Verbrauchern abströmt. Damit sinkt auch der Systemdruck der Pumpe 13. Auf diese Weise wird die Prioritätsversorgung der Bremse gewahrt. Die anderen Verbraucher sind dieser Prioritätsversorgung nachgeschaltet.

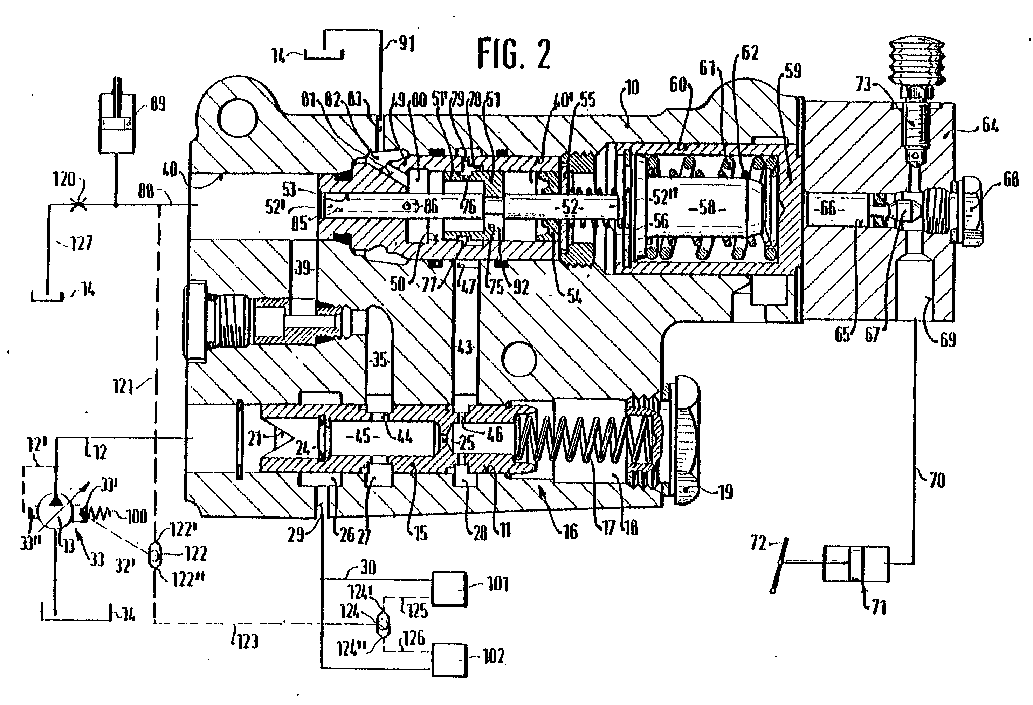

Das Ausführungsbeispiel nach Figur 2 unterscheidet sich gegenüber demjenigen nach Figur 1 dadurch, daß in der Leitung 88 hinter dem Anschluß zum Bremszylinder 89 eine Drossel 120 angeordnet ist, deren Ablauf über die Leitung 127 zum Behälter 14 führt. Von der Leitung 88 zweigt vor der Abzweigung zum Bremszylinder 89 eine Steuerleitung 121 ab und führt zum ersten Ventilsitz 122' eines Wechselventils 122, von dessen zweitem Ventilsitz 122" eine Leitung 123 ausgeht, die an der Längsseite eines Wechselrückschlagventils 124 mündet. Von dessen Ventilsitzen 124' und 124" führen Steuerleitungen 125, 126 zu den Verbrauchern. Von der Längsseite des Wechselrückschlagventils 122 führt eine Leitung 32' zum Kolben 33' der Verstelleinrichtung 33. Der in der Leitung 88 herrschende Bremsdruck pflanzt sich über die Leitung 121 zum Wechselrückschlagventil 122 fort. Die Drücke der Verbraucher pflanzen sich über die Leitungen 125 und 126 zum Wechselrückschlag 124 fort. Der höhere der beiden Drücke wird ausgewählt und über die Leitung 123 zum Wechselrückschlag 122 fortgepflanzt. Dort wiederum wird der höhere der beiden Drücke aus den Leitungen 121 bzw. 123 ausgewählt und über die Leitung 32' in die Verstelleinrichtung 33 fortgepflanzt und stellt die Pumpe so ein, daß sie gerade den notwendigen Förderstrom liefert. Dies ist also wiederum ähnlich wie im Ausführungsbeispiel nach Figur 1.

**Patentansprüche**

1. Hydraulische Steuereinrichtung, die das von einer Druckmittelquelle geförderte Druckmittel über ein Stromregelventil (16) mindestens einem Verbraucher und über eine hydraulisch ansteuerbare Bremseinrichtung bei deren Aktivierung einem Bremszylinder (89) zuführt, wobei ein vom Stromregelventil über einen zu einer Schieberbohrung führenden ersten Kanal (43) fließender Steuerölstrom durch einen Schieber (51) unterbrochen wird, wobei in der Bremseinrichtung ein Bremsdruck erzeugt wird, der über das Stromregelventil und einen zweiten Kanal (35) zum Bremszylinder fortgepflanzt wird und wobei ferner die Pumpe (13) verstellbar ausgebildet ist und durch einen Verstelldruck gesteuert ist, der in Beziehung zum Druck in der Bremseinrichtung steht, dadurch gekennzeichnet, daß an die Steuereinrichtung mindestens ein weiterer Verbraucher (101, 102) angeschlossen ist, dessen Druck einem Wechselrückschlagventil (103, 122) zugeleitet wird, an das auch ein weiterer Signaldruck herangeführt wird, und daß der höhere der beiden Drücke an die Verstelleinrichtung (33) der Pumpe weitergeleitet wird.

2. Einrichtung nach Anspruch 1, dadurch gekennzeichnet, daß der weitere Signaldruck der in der Steuereinrichtung herrschende Steuerdruck für die Bremseinrichtung ist.

3. Einrichtung nach Anspruch 1, dadurch gekennzeichnet, daß der weitere Steuerdruck der in der Bremsleitung (88) herrschende Bremsdruck ist.

4. Einrichtung nach einem der Ansprüche 1 bis 3, dadurch gekennzeichnet, daß von der Pumpe (13) außer dem Bremszylinder (89) mehrere zweite Verbraucher versorgt werden, die ebenfalls über Wechselrückschlagventile (105, 124) an die Verstelleinrichtung (33) der Pumpe angeschlossen sind.

**Revendications**

1. Dispositif hydraulique de commande qui amène, par l'intermédiaire d'une soupape de réglage du débit (16) le fluide sous pression refoulé à partir d'une source de fluide sous pression à au moins un dispositif utilisateur, et lors de l'activation d'un dispositif de freinage susceptible d'être commandé hydrauliquement, l'amène par l'intermédiaire de ce dispositif, à un cylindre de frein (89), un débit d'huile de commande, s'écoulant de la soupape de réglage du débit par l'intermédiaire d'un premier canal (43) aboutissant à un alésage de tiroir, étant interrompu par un tiroir (51), tandis que dans le dispositif de freinage est engendrée une pression de freinage qui, par l'intermédiaire de la soupape de réglage du débit et d'un second canal (35) se propage jusqu'au cylindre de frein, la pompe (13) étant en outre réalisée de façon réglable et étant commandée par une pression de réglage, qui est en relation avec la pression dans le dispositif de freinage, dispositif de commande caractérisé en ce qu'au moins un autre dispositif utilisateur (101, 102) est raccordé à ce dispositif de commande, la pression de ce dispositif utilisateur étant transmise à une soupape anti-retour à deux voies (103, 122) à laquelle est également amenée une autre pression de signalisation, et la plus élevée de ces deux pressions étant transmise au dispositif de réglage (33) de la pompe.

2. Dispositif selon la revendication 1, caractérisé en ce que cette autre pression de signalisation est la pression de commande, régnant dans le dispositif de commande, pour le dispositif de freinage.

3. Dispositif selon la revendication 1, caractérisé en ce que l'autre pression de commande est la pression de freinage régnant dans la canalisation de freinage (88).

4. Dispositif selon une des revendications 1 à 3, caractérisé en ce que, en dehors du cylindre de freinage (89), plusieurs seconds dispositifs utilisateurs sont alimentés par la pompe (13), ces dispositifs utilisateurs étant également raccordés par des soupapes de retenue à deux voies (105, 124) au dispositif de réglage (33) de la pompe.

**Claims**

1. Hydraulic control device which feeds the pressure medium conveyed from a pressure-medium source to at least one consumer via a flow-regulating valve (16) and to a brake cylinder (89) via a hydraulically activatable braking device when the latter is activated, a stream of control oil flowing from the flow-regulating valve via a first channel (43) leading to a slide bore being interrupted by a slide (51), there being generated in the braking device a brake pressure which is propagated to the brake cylinder via the flow-regulating valve and a second channel (35), and furthermore the pump (13) being made adjustable and being controlled by an adjusting pressure which is in relation to the pressure in the braking device, characterized in that connected to the control device is at least one further consumer (101, 102), the pressure of which is fed to a reversing nonreturn valve (103, 122), to which a further signal pressure is also delivered, and in that the higher of the two pressures is transmitted to the adjusting device (33) of the pump.

2. Device according to Claim 1, characterized in that the further signal pressure is the control pressure for the braking device which prevails in the control device.

3. Device according to Claim 1, characterized in that the further control pressure is the brake pressure prevailing in the brake line (88).

4. Device according to one of Claims 1 to 3, characterized in that not only the brake cylinder (89), but a plurality of second consumers likewise connected to the adjusting device (33) of the pump via reversing nonreturn valves (105, 124) is supplied by the pump (13).

FIG. 1

FIG. 2